# EUROPEAN PATENT SPECIFICATION

(11) **EP 0 440 091 B1**
(45) Date of publication and mention of the grant of the patent: **08.11.1995**
(21) Application number: 91100907.4
(22) Date of filing: 24.01.1991
(51) Int. Cl.: G11B 20/12, G11B 5/012, G11B 27/30

(54) **A disk recording/reproducing method and reproducing apparatus**
Plattenaufzeichnungs- und -wiedergabeverfahren und Wiedergabegerät
Procédé d'enregistrement et reproduction de disques et appareil de reproduction

(30) Priority: 31.01.1990 JP 20958/90
(43) Date of publication of application: 07.08.1991
(73) Proprietor: SONY CORPORATION, Tokyo (JP)
(72) Inventor: Kondo, Tsuyoshi, c/o Sony Corporation, Shinagawa-ku, Tokyo (JP); Maeshima, Yasunori, c/o Sony Corporation, Shinagawa-ku, Tokyo (JP); Fukushima, Takashi, c/o Sony Corporation, Shinagawa-ku, Tokyo (JP)
(74) Representative: TER MEER STEINMEISTER & PARTNER GbR

(56) References cited:
- EP-A- 0 066 085
- COMPUTER TECHNOLOGY REVIEW. vol. 6, no. 3, 1986, LOS ANGELES US pages 81 - 93; SANFORD: 'Porting files between computers requires attention to formats'
- PATENT ABSTRACTS OF JAPAN vol. 9, no. 265 (P-399) 23 October 1985 & JP-A-60 113 361

## Description

### BACKGROUND OF THE INVENTION

### Field of the Invention

The present invention relates to a disk recording apparatus using a magnetic disk of 2 inches (50,8 mm) for example, and more particularly, to a disk recording apparatus having compatibility with a disk whose storage capacity is different.

### Description of the Prior Art

A data recording/reproducing apparatus for recording and reproducing digital data to/from a still picture recording magnetic disk whose outer diameter is 2 inches has been known. In addition, handy character processing apparatuses having such a magnetic disk have been widely used.

Conventionally, such a magnetic disk has 50 circular tracks at pitches of 0.1 mm. The track numbers are inwardly assigned from track number 1 to track number 50. The storage capacity per track is 16 kilo-bits. Thus, one disk can record data of (16 kilo-bits x 50 tracks = 819 kilo-bits). Thus, the conventional magnetic disk whose number of tracks is 50 is hereinafter named the 1M bytes disk.

On the other hand, a magnetic disk where the number of tracks is increased and thereby the storage capacity is increased has been proposed. For example, 20 tracks are newly added on both the outer and inner peripheries of the conventional magnetic disk. Since the new 40 tracks are added to the conventional 50 tracks, the total number of tracks becomes 90. When the number of tracks becomes 90, data of (16- kilo-bits x 90 tracks = 1.44 mega-bits) can be recorded per disk. The disk with 90 tracks is hereinafter named the 2M bytes disk.

Magnetic disk drive apparatuses which deal with the 2M bytes disk have been developed. The disk drive apparatus which deals with the 2M bytes disk should have compatibility with the conventional 1M bytes disk. In other words, the magnetic disk drive apparatus which deals with the 2M bytes should be capable of recording and reproducing data to/from the conventional 1M bytes disk.

### OBJECTS AND SUMMARY OF THE INVENTION

It is therefore an object of the present invention to provide a method for compatibly recording/reproducing a first disk type having a normal number of tracks and a second disk type having a higher number of tracks and a magnetic disk recording apparatus which has comptability between the 1M bytes disk and the 2M bytes disk.

According to a first aspect, the invention provides a method for compatibly recording/reproducing a first disk type having a normal number of tracks and a second disk type having a higher number of tracks, both disk types having a disk format which is compatible to the normal number of tracks and a higher number of tracks, by selecting:
- a first recording/reproducing mode in accordance with track number information of a first and second disk type, wherein on a disk of a first and second type the respective numbering of tracks is linearly assigned in the radial direction of the disk from its one end to its other end, and
- a second recording/reproducing mode in accordance with said track number information, wherein on a disk of the compatible format type said higher number of tracks is assigned in a numbering scheme in such a way that the track numbering of said first disk type occupies a radial area common to that of the first disk type and that a further linear numbering of further tracks corresponding to the further tracks of said second disk type is offset from said numbering according to said first disk type in said common radial area (claim 1).

Depending claims 2 to 4 each specify advantageous developments thereof.

According to a second aspect, the invention provides a disk reproducing apparatus for reproducing compatibly a first disk type having a normal number of tracks and a second disk type having a higher number of tracks, wherein on a disk of the first and second type the respective numbering of tracks is linearly assigned in the radial direction of the disk from its one end to its other end and on a disk of the compatible format type said higher number of tracks is assigned in a numbering scheme in such a way that the track numbering of said first disk type occupy a radial area common to that of the first disk type and that a further linear numbering of further tracks corresponding to the further tracks of said second disk type is offset from said numbering according to said first disk type in said common radial area, said disk apparatus comprising:
a) a reproducing head for picking up recorded information from said recording disk;
b) track signal reproducing means for reproducing track numbers from a reproduced signal from said reproducing head,
c) position sensing means for sensing an access position of said reproducing head and outputting track numbers; and
d) recording format decision means for deciding recording format of said recording disk by comparing track numbers obtained by said position sensing means with track numbers obtained by said reproducing head (claim 5).

Depending claim 6 specifies an advantageous development thereof.

When the 2M bytes disk is initialized, one of two formats which are 2M bytes NR/HD compatible format and 2M bytes HD format can be selected. In the 2M bytes NR/HD compatible format, track numbers (1) to (50) are assigned to tracks which are located at the same positions of the 1M bytes disk. To the outer peripheral tracks, track numbers (-19) to (0) are assigned. To the inner peripheral tracks, track numbers (51) to (70) are assigned. In the 2M bytes NR/HD compatible format, linear track numbers (0) to (89) are assigned.

### BRIEF DESCRIPTION OF THE DRAWINGS

Fig. 1A is a plan views of an example of a magnetic disk;
Fig. 1B is a plan view of another example of a magnetic disk;
Fig. 2 is a plan view describing an example of the format of the magnetic disk;
Fig. 3 is a plan view describing an example of the format of the magnetic disk;
Fig. 4 is a table describing an example of the present invention;
Fig. 5 is a schematic diagram describing a recording format of the magnetic disk;
Fig. 6 is a block diagram of an example of a magnetic disk recording/reproducing apparatus according to the present invention; and
Fig. 7 is a flow chart describing the embodiment.

### DETAILED DESCRIPTION OF THE PREFERRED EMBODIMENTS

An embodiment of the present invention will be described referring to the accompanying drawings,.

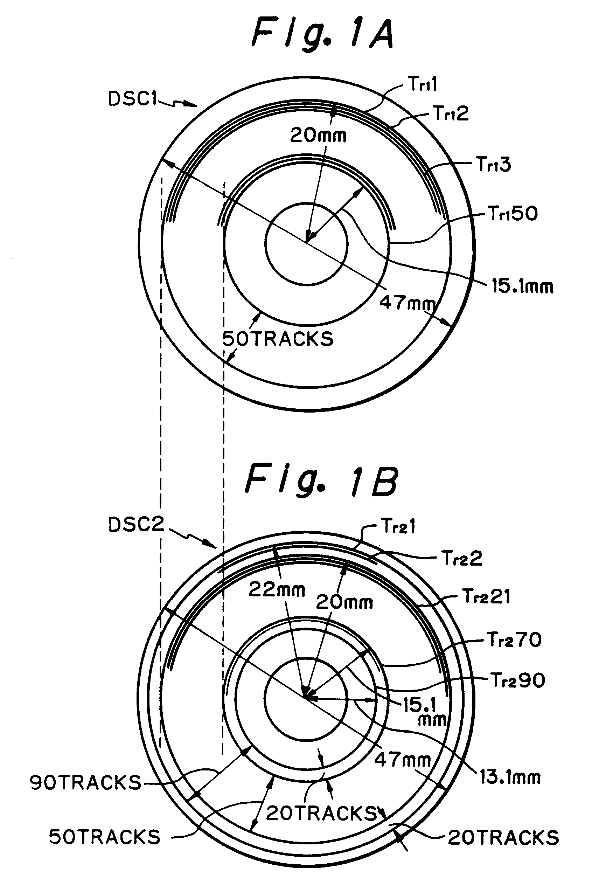

Fig. 1A shows the structure of a 1M bytes disk DSC1. The outer diameter of the 1M bytes disk DSC1 is 47 mm. On the 1M bytes disk DSC1, 50 tracks Tr₁1 to Tr₁50 are disposed at pitches of 0.1 mm as shown in Fig. 1A. The track Tr₁1 is positioned at a radius of 20 mm. The track Tr₁50 is positioned at a radius of 15.1 mm. The 1M bytes disk DSC1 has a data storage capacity of 819 KB. Track number (1) to track number (50) are assigned to the track Tr₁1 to track Tr₁50. The format where such track numbers are assigned on the 1M bytes disk is hereinafter named the 1M bytes NR (Normal) format or the 1M bytes NR format.

Fig. 1B shows the structure of a 2M bytes disk DSC2. The outer diameter of the 2M bytes disk DSC2 is 47 mm which is the same as the 1M bytes disk DSC1. On the 2M bytes disk DSC2, 20 tracks are newly added to both the outer and inner peripheries of the 1M bytes disk DSC1. As shown in Fig. 1B, on the 2M bytes disk DSC2, 90 tracks Tr₂21 to Tr₂90 are disposed at pitches of 0.1 mm. The outermost periphery track Tr₂1 is positioned at a radius of 22 mm. The innermost periphery track Tr₂90 is positioned at a radius of 13.1 mm. The 21st track Tr₂21 to the 70th track Tr₂70 (which are counted from the outermost periphery) are disposed at the positions in accordance with the track Tr₁1 to track Tr₁50 on the 1M bytes disk DSC1. In other words, the Tr₂21 is positioned at a radius of 20 mm. The Tr₂70 is positioned at a radius of 15.1 mm.

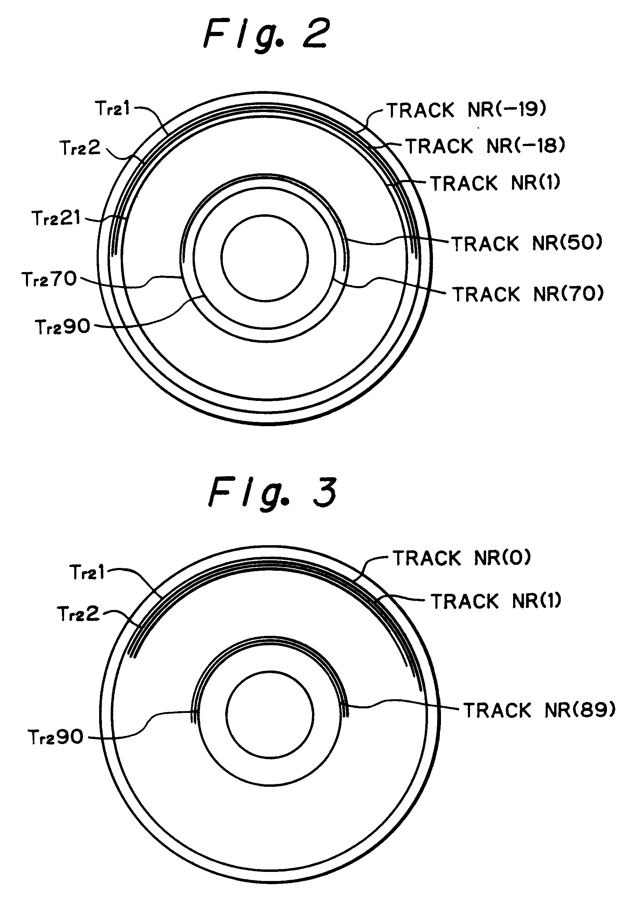

The 2M bytes disk DSC2 are assigned track numbers in two formats. One type is a format where track numbers are assigned with an offset by considering compatibility with the 1M bytes NR format. This format is named the 2M bytes NR/HD compatible format. In this NR/HD compatible format, as shown in Fig. 2, the track Tr₂21 to track Tr₂70 are assigned track number (1) to track number (50). The outer track Tr₂1 to track Tr₂20 are assigned the track number (-19) to (0). The inner track Tr₂71 to track Tr₂90 are assigned the track number (51) to track number (70). When the track numbers are assigned in the aforementioned manner, since the track Tr₂21 to track Tr₂70 in accordance with the track Tr₁1 to track Tr₁50 on the 1M bytes disk DSC1 become the same track number (1) to track number (50), the compatibility can be readily accomplished.

In the second format type, linear track numbers are assigned. This format is hereinafter named the 2M bytes HD (High Density) format. In this format, as shown in Fig. 3, the track Tr₂1 to track Tr₂90 are assigned continuous track number (0) to track number (89). When such linear track numbers are assigned, it is preferable to deal with continuous data.

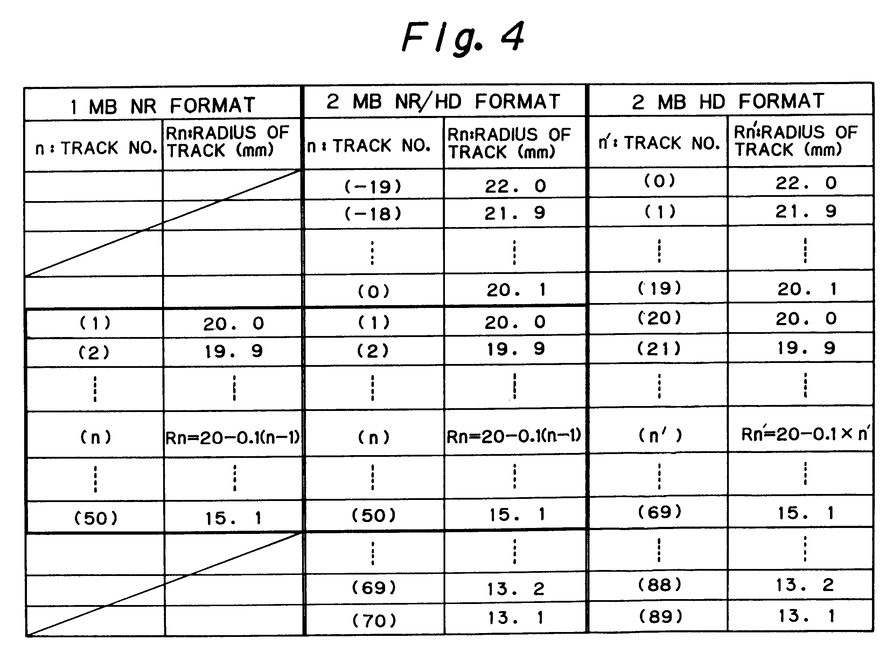

Fig. 4 shows the relationship among the 1M bytes NR format, 2M bytes NR/HD compatible format, and 2M bytes HD format. As shown in Fig. 4, when the 2M bytes disk DSC2 is initialized in the 2M bytes NR/HD compatible format, the track numbers thereof accordingly become the same as those of the 1M bytes disk which is initialized in the 1M bytes NR format. The area surrounded by a thick line in Fig. 4 shows a compatible area. Thus, the disk recording/reproducing apparatus for the 2M bytes NR format can record and reproduce data to/from the 1M bytes disk DSC1. In other words, by using the 2M bytes NR/HD compatible format, upper compatibility can be fully accomplished.

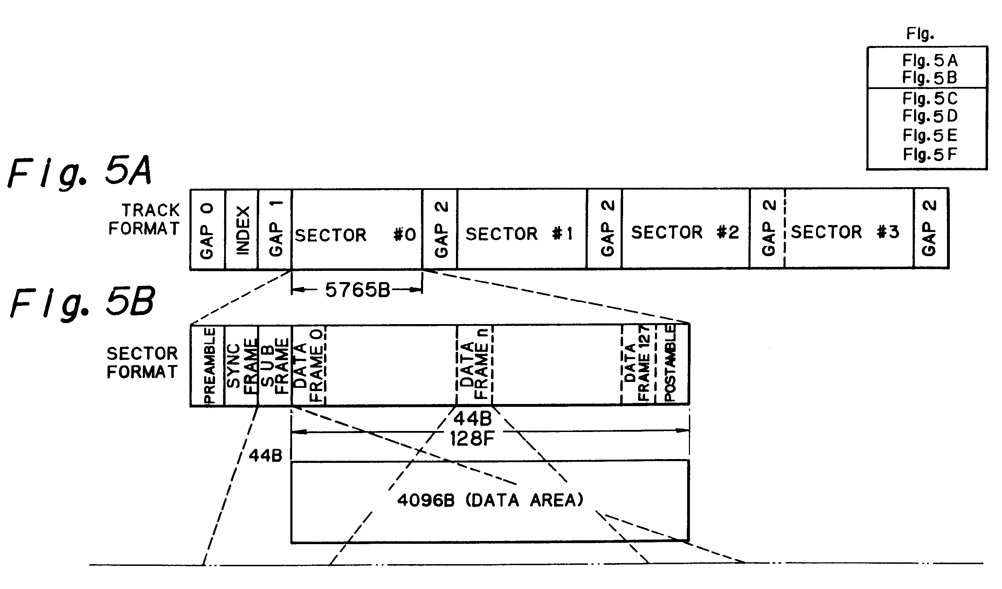

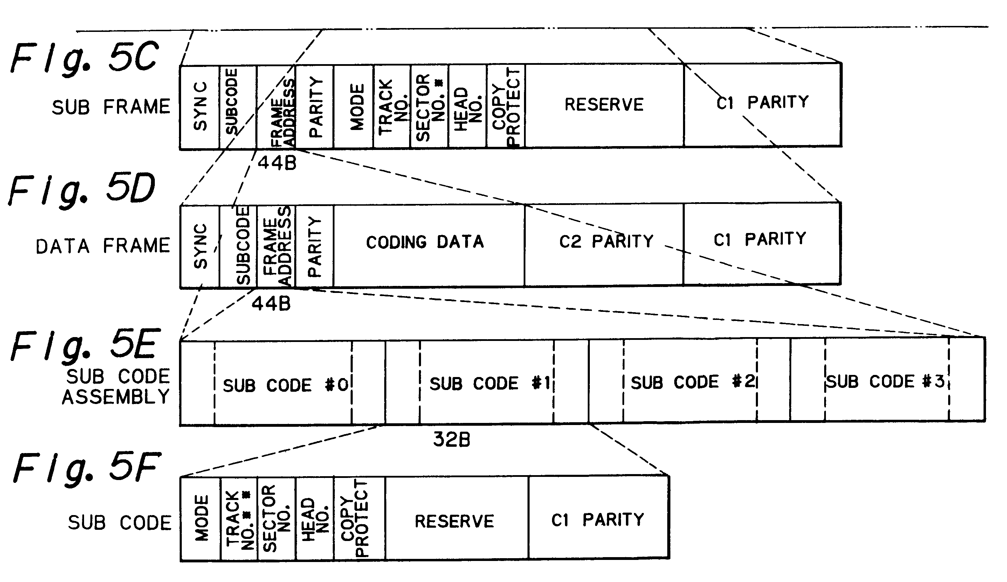

As shown in Fig. 5, each track number is recorded in both the track number area of sub frame and the track number area of sub code.

Fig. 5A shows the structure of one track. As shown in Fig. 5A, one track is divided into four sectors. As shown in Fig. 5B, data is recorded in each sector. The storage capacity of data record area is 4096 bits. As shown in Fig. 5C, the track number is recorded in the sub frame of each sector.

The frame address in the sub frame (see Fig. 5C) and the frame address in the data frame (see Fig. 5D) of each sector, as shown in Fig. 5E, a sub code is recorded, respectively. As shown in Fig. 5F, in the sub codes #10 to #3, the track number ** are also recorded.

The track number ** is the same as the track number * recorded in the sub frame. Thus, the reliability of reading the track numbers is improved. In one track, as the track number ** is recorded four times in the sub codes #0 to #3 and the track number * is recorded one time in the sub frame, the track number is recorded five times. As one track is divided into four sectors, in one track, the track number is recorded 20 times (5 x 4 = 20).

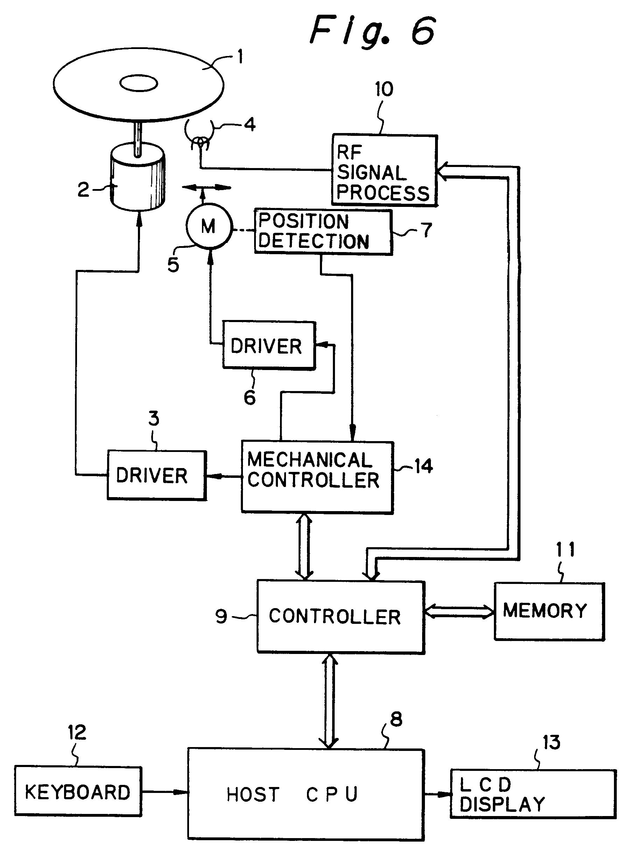

Fig. 6 shows an example of a disk recording/reproducing apparatus according to the present invention.

In Fig. 6, the reference numeral 1 is a magnetic disk. The magnetic disk 1 is the aforementioned 1M bytes disk DSC1 or 2M bytes disk DSC2. The magnetic disk 1 is rotated by a spindle motor 2. To the spindle motor 2, a rotation drive signal is supplied from a mechanical controller 14 through a driver 3.

The reference numeral 4 is a magnetic head. The magnetic head 4 is moved in the direction of the radius of the magnetic disk 1 by means of the head moving motor 5. To the head moving motor 5, a drive signal is supplied from the mechanical controller 14 through a driver 6. The physical position of the magnetic head 4 is detected by a position detector 7. The output of the position detector 7 is supplied to the mechanical controller 14. By means of the output of the position detector 7, the track number accessed by the magnetic head 4 can be detected.

Data from a host CPU 8 is supplied to the magnetic head 4 through a controller 9 and an RF signal processing circuit 10. The data is recorded on the magnetic disk 1 by means of the magnetic head 4. A reproduction signal of the magnetic disk 1 is supplied to the host CPU 8 through the RF signal processing circuit 10 and the controller 9.

The host CPU 8 is bidirectionally connected to the mechanical controller 14 through the controller 9. The host CPU 8 and the memory 11 are bidirectionally connected to the controller 9.

To the host CPU 8, a keyboard 12 as an input unit and a liquid crystal display 13 as an output unit are connected.

Before using the magnetic disk recording/reproducing apparatus, the magnetic disk 1 being loaded is initialized. When the 2M bytes disk DSC2 as the magnetic disk 1 has been loaded, before the disk is initialized, one of two formats which are the 2M bytes NR/HD compatible bytes VF format and 2M bytes HD format can be selected.

When the 2M bytes NR/HD compatible format mode is designated by the operation of the keyboard 12, as shown in Fig. 2, track numbers with an offset are assigned to the tracks thereon so as to have the compatibility. On the other hand, when the 2M bytes HD format is designated, as shown in Fig. 3, linear track numbers are assigned to the tracks thereon.

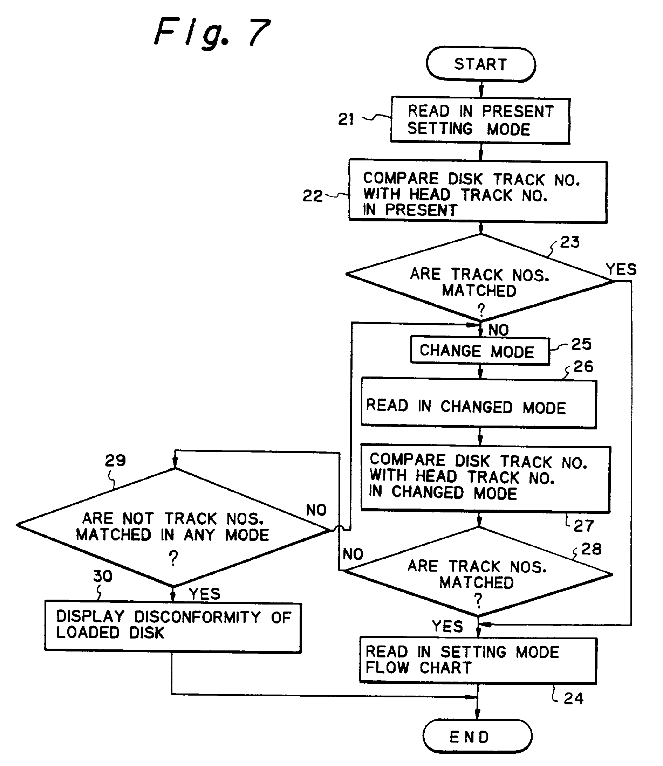

In the magnetic disk recording/reproducing apparatus, one of the 1M bytes disk in the 1M bytes NR format, the 2M bytes disk in the 2M bytes NR/HD compatible format, and the 2M bytes disk in the 2M bytes HD format is loaded as the magnetic disk 1. When the magnetic disk 1 is reproduced, the process shown by the flow chart of Fig. 7 is executed and thereby the format of the magnetic disk 1 is determined.

In other words, in the mode currently being set, the track number of the magnetic disk 1 being loaded is read by the position detector 7 (in step 21). Thereafter, the track number accessed by the magnetic head 4 in the mode being set is compared with the track number really being read by the magnetic head 4 (in step 22).

Thereafter, it is determined whether or not the track number being accessed by the magnetic head 4 in the mode being set accords with the track number being read (in step 23). When the track number being accessed by the magnetic head 4 in the mode being set accords with the track number being read, it is determined that the mode currently being set accords with the format of the magnetic disk 1 being loaded. Thereby, the magnetic disk 1 is recorded/reproduced in the present mode (in step 24).

When the track number being accessed in the mode (detected by the position detector 7) being set does not accord with the track number really being read in step 23, the mode is changed (in step 25). In other words, for example, when the mode has been set in the 1M bytes NR format, the mode is changed to the 2M bytes NR/HD compatible format. On the other hand, when the mode has been set to the 2M bytes NR/HD compatible format, the mode is changed to the 2M bytes HD format. Moreover, when the mode has been set to the 2M bytes HD format, the mode is changed to the 1M bytes NR format.

Thereafter, in the changed mode, the track number of the magnetic disk 1 being loaded is read (in step 26). Thereafter, the track number accessed by the magnetic head 4 in the changed mode is compared with the track number being read (in step 27).

It is determined whether or not the track number accessed by the magnetic head 4 in the changed mode accords with the track number being read (in step 28). When the track number being accessed by the magnetic head 4 in the mode being set accords with the track number being read, the flow advances to the step 24. In the step 24, the magnetic disk 1 is recorded or reproduced in the present mode.

When the track number being accessed by the magnetic head 4 in the mode being set does not accord with the track number being read, the flow returns back to the step 25. In the step 25, the mode is changed. At that time, it is determined that the mode has been changed to all the modes (in step 29).

When the track number being accessed by the magnetic head 4 does not accord with the track number being read even after the mode has been changed to all the modes, a message representing that the loaded disk cannot be used is displayed (in step 30).

According to the present invention, when the 2M bytes disk is initialized, one of two formats which are 2M bytes NR/HD compatible format and 2M bytes HD format can be selected. In the 2M bytes NR/HD compatible format, same track numbers (1) to (50) are assigned to tracks which are located at the same positions of the 1M bytes disk. To the outer peripheral tracks, track numbers (-19) to (0) are assigned. To the inner peripheral tracks, track numbers (51) to (70) are assigned. Thus, the compatibility with the 1M bytes disk can be readily accomplished. On the other hand, in the 2M bytes NR/HD compatible format, linear track numbers (0) to (89) are assigned. Thus, continuous data can be readily processed.

## Claims

1. A method for compatibly recording/reproducing a first disk type (DSC1) having a normal number of tracks and a second disk type (DSC2) having a higher number of tracks, both disk types (DSC1, DSC2) having a disk format which is compatible to the normal number of tracks and the higher number of tracks, by selecting:
- a first recording/reproducing mode in accordance with track number information of a first and second disk type, wherein on a disk of a first and second type the respective numbering of tracks is linearly assigned in the radial direction of the disk from its one end to its other end, and
- a second recording/reproducing mode in accordance with said track number information, wherein on a disk of the compatible format type said higher number of tracks is assigned in a numbering scheme in such a way that the track numbering of said first disk type occupies a radial area common to that of the first disk type and that a further linear numbering of further tracks corresponding to the further tracks of said second disk type is offset from said numbering according to said first disk type in said common radial area.

2. A disk recording/reproducing method according to claim 1, wherein said further recording tracks are at least on one extended end of a line in the radial direction of the disk beyond the recording tracks of the common, radial area.

3. A disk recording/reproducing method according to claim 1, wherein said further recording tracks are formed on both extended ends of the line in the radial direction of the disk beyond the recording tracks of the common radial area.

4. A disk recording/reproducing method according to one of the claims 1, 2 or 3, wherein in setting said first recording mode, track numbers increasing from address number 0 are assigned, and in said second recording mode, the minus sign track numbers decreasing from address number 0 are formed in part of disk area.

5. A disk reproducing apparatus for reproducing compatibly a first disk type having a normal number of tracks and a second disk type having a higher number of tracks, wherein on a disk of the first and second type the respective numbering of tracks is linearly assigned in the radial direction of the disk from its one end to its other end and on a disk of the compatible format type said higher number of tracks is assigned in a numbering scheme in such a way that the track numbering of said first disk type occupy a radial area common to that of the first disk type and that a further linear numbering of further tracks corresponding to the further tracks of said second disk type is offset from said numbering according to said first disk type in said common radial area, said disk apparatus comprising:
a) a reproducing head (4) for picking up recorded information from said recording disk (1);
b) track signal reproducing means (8, 9, 10) for reproducing track numbers from a reproduced signal from said reproducing head (4),
c) position sensing means (7) for sensing an access position of said reproducing head (4) and outputting track numbers; and
d) recording format decisiion means (8) for deciding recording format of said recording disk (1) by comparing track numbers obtained by said position sensing means (7) with track numbers obtained by said reproducing head (4).

6. A disk reproducing apparatus according to claim 5, further comprising display means 813) for displaying the decision result of said recording format decision means.

## Patentansprüche

1. Verfahren zum kompatiblen Bespielen/Abspielen eines ersten Plattentyps (DSC1) mit einer normalen Anzahl von Spuren sowie eines zweiten Plattentyps (DSC2) mit einer höheren Anzahl von Spuren, wobei beide Plattentypen (DSC1, DSC2) ein Plattenformat aufweisen, das mit der normalen Anzahl von Spuren und der höheren Anzahl von Spuren kompatibel ist, und zwar durch Auswählen:
- eines ersten Aufzeichnungs-/Wiedergabemodus abhängig von Spurnummerninformation eines ersten und eines zweiten Plattentyps, wobei auf einer Platte von einem ersten und zweiten Typ die jeweilige Numerierung von Spuren in radialer Richtung von deren einem Ende zu deren anderem Ende linear zugeordnet ist; und
- eines zweiten Aufzeichnungs-/Wiedergabemodus abhängig von der Spurnummerninformation, wobei auf einer Platte des kompatiblen Formattyps die höhere Anzahl von Spuren mit einem Numerierungsschema auf solche Weise zugeordnet ist, daß die Spurnumerierung des ersten Plattentyps einen radialen Bereich belegt, der dem des ersten Plattentyps gemeinsam ist, und daß eine weitere lineare Numerierung weiterer Spuren, die den weiteren Spuren des zweiten Plattentyps entspricht, gegen die Numerierung entsprechend dem ersten Plattentyp im gemeinsamen radialen Bereich versetzt ist.

2. Plattenaufzeichnungs- und -wiedergabeverfahren nach Anspruch 1, bei dem die weiteren Aufzeichnungsspuren mindestens an einem verlängerten Ende einer Linie in radialer Richtung der Platte über die Aufzeichnungsspuren im gemeinsamen radialen Bereich vorliegen.

3. Plattenaufzeichnungs- und -wiedergabeverfahren nach Anspruch 1, bei dem die weiteren Aufzeichnungsspuren an beiden verlängerten Enden der Linie in radialer Richtung der Platte über die Aufzeichnungsspuren im gemeinsamen radialen Bereich hinaus vorliegen.

4. Plattenaufzeichnungs- und -wiedergabeverfahren nach einem der Ansprüche 1, 2 oder 3, bei dem beim Einstellen des ersten Aufzeichnungsmodus Spurnummern zugeordnet werden, die ausgehend von der Adreßnummer 0 ansteigen, und im zweiten Aufzeichnungsmodus in einem Teil des Plattenbereichs Spurnummern mit negativem Vorzeichen, abnehmend ausgehend von der Adreßnummer 0, zugeordnet werden.

5. Plattenwiedergabegerät zum kompatiblen Abspielen eines ersten Plattentyps mit einer normalen Anzahl von Spuren und eines zweiten Plattentyps mit einer höheren Anzahl von Spuren, wobei auf einer Platte vom ersten und zweiten Typ die jeweilige Spurnumerierung in radialer Richtung der Platte ausgehend von deren einem Ende zu deren anderem Ende linear zugeordnet ist, und auf einer Platte des kompatiblen Formattyps die höhere Anzahl von Spuren mit einem Numerierungsschema auf solche Weise zugeordnet ist, daß die Spurnumerierung des ersten Plattentyps einen radialen Bereich einnimmt, der mit dem des ersten Plattentyps übereinstimmt, und daß eine weitere lineare Numerierung weiterer Spuren, die den weiteren Spuren des zweiten Plattentyps entspricht, gegen die Numerierung entsprechend dem ersten Plattentyp im gemeinsamen radialen Bereich versetzt ist, mit:
a) einem Abspielkopf (4) zum Abtasten der auf der Aufzeichnungsplatte (1) aufgezeichneten Information;
b) einer Spursignal-Abspieleinrichtung (8, 9, 10) zum Abspielen der Spurnummern aus einem vom Abspielkopf (4) abgespielten Signal;
c) einer Positionserfassungseinrichtung (7) zum Erfassen der Zugriffsposition des Abspielkopfs (4) und zum Ausgeben von Spurnummern; und
d) einer Aufzeichnungsformat-Bestimmungseinrichtung (8) zum Bestimmen des Aufzeichnungsformats auf der Aufzeichnungsplatte (1) zum Vergleichen der durch die Positionserfassungseinrichtung (7) erhaltenen Spurnummern mit durch den Abspielkopf (4) erhaltenen Spurnummern.

6. Plattenwiedergabegerät nach Anspruch 5, ferner mit einer Anzeigeeinrichtung (13) zum Anzeigen des Bestimmungsergebnisses der Aufzeichnungsformat-Bestimmungseinrichtung.

## Revendications

1. Procédé pour l'enregistrement/lecture compatible d'un premier type de disque (DSC1) possédant un nombre normal de pistes et un second type de disque (DSC2) possédant un plus grand nombre de pistes, chacun des types de disque (DSC1, DSC2) possédant un format de disque qui est compatible avec le nombre normal de pistes et le plus grand nombre de pistes, procédé sélectionnant :
- un premier mode d'enregistrement/lecture selon l'information du nombre de pistes d'un premier et d'un second types de disque, selon lequel sur un disque d'un premier et d'un second types, le nombre respectif de pistes est assigné, de façon linéaire, dans la direction radiale du disque d'une extrémité à l'autre; et
- un second mode d'enregistrement/lecture selon ladite information du nombre de pistes, selon lequel sur un disque du type de format compatible, ledit plus grand nombre de pistes est assigné dans un schéma de numérotation de telle façon que la numérotation de piste dudit premier type de disque occupe une zone radiale commune à celle du premier type de disque et de telle façon qu'une numérotation linéaire supplémentaire de pistes supplémentaires, correspondant aux pistes supplémentaires dudit second type de disque, soit décalée de ladite numérotion selon ledit premier type de disque dans ladite zone radiale commune.

2. Procédé d'enregistrement/lecture de disque selon la revendication 1, selon lequel lesdites pistes supplémentaires d'enregistrement se trouvent au moins sur une extrémité étendue d'une ligne dans la direction radiale du disque au-delà des pistes d'enregistrement de la zone radiale commune.

3. Procédé d'enregistrement/lecture de disque selon la revendication 1, selon lequel lesdites pistes supplémentaires d'enregistrement sont formées sur chacune des extrémités étendues de la ligne dans la direction radiale du disque au-delà des pistes d'enregistrement de la zone radiale commune.

4. Procédé d'enregistrement/lecture de disque selon l'une quelconque des revendications 1, 2 ou 3, selon lequel, lors du choix dudit premier mode d'enregistrement, on assigne des numéros de piste croissants à partir de l'adresse 0 et dans ledit second mode d'enregistrement, les numéros de piste de signe négatif, diminuant à partir du numéro d'adresse 0, sont formés dans une partie de la zone de disque.

5. Dispositif d'enregistrement de disque pour l'enregistrement compatible d'un premier type de disque possédant un nombre normal de pistes et d' un second type de disque possédant un plus grand nombre de pistes, dans lequel, sur un disque du premier et du second types, la numérotation respective des pistes est assignée, de façon linéaire, dans la direction radiale du disque d'une extrémité à l'autre et, sur un disque du type de format compatible, ledit plus grand nombre de pistes est assigné selon un schéma de numérotation de telle façon que la numérotation des pistes dudit premier type de disque occupe une zone radiale commune à celle du premier type de disque et de telle façon qu'une numérotation linéaire supplémentaire de pistes supplémentaires, correspondant aux pistes supplémentaires dudit second type de disque, soit décalée de ladite numérotation selon ledit premier type de disque dans ladite zone radiale commune, ledit dispositif de disque comprenant :
- une tête de lecture (4) pour la lecture d'une information enregistrée à partir dudit disque d'enregistrement (1);
- un moyen de lecture de signal de piste (8, 9, 10) pour la lecture des numéros de piste à partir d'un signal de lecture venant de ladite tête de lecture (4);
- un moyen de détection de position (7) pour détecter une position d'accès de ladite tête de lecture (4) et pour générer des numéros de piste; et
- un moyen de choix du format d'enregistrement (8) pour décider du format d'enregistrement dudit disque d'enregistrement (1) par comparaison des numéros de piste obtenus par ledit moyen de détection de position (7) avec les numéros de piste obtenus par ladite tête de lecture (4).

6. Dispositif de lecture de disque selon la revendication 5, comprenant, de plus, un moyen d'affichage (13) pour afficher le résultat du choix dudit moyen de choix du format d'enregistrement.
